# EUROPEAN PATENT SPECIFICATION

(11) **EP 4 131 553 B1**
(45) Date of publication and mention of the grant of the patent: **23.04.2025**
(21) Application number: 20926917.4
(22) Date of filing: 27.03.2020
(51) Int. Cl.: H01M 10/058, H01M 4/04, H01M 4/66, H01M 10/052, H01M 10/0565, H01M 4/62, H01M 10/0562, H01M 10/0585, H01M 4/02

(54) **PRODUCTION METHOD FOR SOLID-STATE BATTERY, AND SOLID-STATE BATTERY**
VERFAHREN ZUR HERSTELLUNG EINER FESTSTOFFBATTERIE UND FESTSTOFFBATTERIE
MÉTHODE DE PRODUCTION D'UNE BATTERIE À SEMI-CONDUCTEURS ET BATTERIE À SEMI-CONDUCTEURS

(43) Date of publication of application: 08.02.2023
(73) Proprietor: Terawatt Technology K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2020/014195
(87) International publication number: WO 2021/192260

(56) References cited:
- WO-A1-2012/056765
- WO-A1-2012/056765
- JP-A- 2008 004 424
- JP-A- 2016 539 487
- JP-A- 2016 539 487
- JP-A- 2018 200 873
- JP-A- 2019 009 112
- US-A1- 2019 157 714
- US-A1- 2019 157 714

## Description

### Technical Field

The present invention relates to production method for a solid-state battery, and a solid-state battery.

### Background Art

In recent years, techniques for converting natural energy such as solar power or wind power into electric energy have attracted more attention. Accordingly, various solid-state batteries have been developed as storage devices that are safe and that can store a large amount of electric energy.

Among these, secondary batteries that charge and discharge by transferring metal ions between a positive electrode and a negative electrode are known to have a high voltage and high energy density, and are usually lithium ion secondary batteries. In a typical lithium ion secondary battery, an active material capable of retaining lithium is introduced into the positive electrode and the negative electrode, and charging and discharging are performed by exchanging lithium ions between the positive electrode active material and the negative electrode active material. A lithium metal secondary battery has also been developed that does not use an active material in the negative electrode, but retains lithium by depositing lithium metal on the surface of the negative electrode.

For example, Patent Document 1 discloses a high energy density, high power lithium metal anode secondary battery with a volumetric energy density greater than 1000 Wh/L and/or a mass energy density greater than 350 Wh/kg when discharged at room temperature at a rate of at least 1C. Patent Document 1 discloses that an ultrathin lithium metal anode is used to realize such a lithium metal anode secondary battery.

Patent Document 2 discloses a lithium secondary battery containing a positive electrode, a negative electrode, a separation film interposed between the electrodes, and an electrolyte. In the negative electrode of this lithium secondary battery, metal particles are formed on the negative electrode current collector and move from the positive electrode during charging to form lithium metal on the negative electrode current collector in the negative electrode. Patent Document 2 discloses that this lithium secondary battery can solve problems caused by the reactivity of lithium metal and problems that occur during the assembly process, and has improved performance and a longer service life.

### Citation List

### Patent Literature

Patent Document 1: JP 2019-517722 A
Patent Document 2: JP 2019-537226 A

### Summary of Invention

### Technical Problem

When the present inventors examined conventional solid-state batteries such as those described in the patent documents listed above, they found that either the energy density or the cycle property was inadequate.

For example, a typical secondary battery that charges and discharges by transferring metal ions between a positive electrode active material and a negative electrode active material does not have sufficient energy density. Meanwhile, in lithium metal secondary batteries that retain lithium by depositing lithium metal on the surface of the negative electrode, such as those described in the patent documents listed above, dendrites tend to form on the surface of the negative electrode after repeated charging and discharging, which makes short-circuiting and reduced capacity more likely to occur. As a result, the cycle property is not sufficient.

A method has also been developed of applying a large amount of physical pressure to a lithium metal secondary battery to keep the interface between the negative electrode and the separator under high pressure and suppress discrete growth during lithium metal precipitation. However, because a large mechanical mechanism is required to apply such a high level of pressure, the weight and volume of the battery increase as a whole, and the energy density decreases.

In view of these problems, it is an object of the present invention to provide a solid-state battery having high energy density and improved cycle property and a production method for this solid-state battery.

### Solution to Problem

One aspect of the present invention is a method for producing a solid-state battery comprising a positive electrode, a solid electrolyte, and a negative electrode, the method comprising the steps of: preparing a negative electrode that is free of a negative-electrode active material; and forming, on at least one surface of the negative electrode, a solid electrolyte interface layer comprising a lithium-containing organic compound and a lithium-containing inorganic compound by immersing the negative electrode in a layer forming solution comprising a lithium salt and a precursor and thereafter causing a reduction reaction on the surface of the negative electrode.

When a negative electrode containing no negative electrode active material is used in a solid-state battery, metal is deposited on the surface of the negative electrode and the deposited metal is dissolved during charging and discharging. This increases the energy density. Also, when the solid electrolyte interface layer ("SEI layer") is formed before assembly of the solid-state battery, a precursor for SEI layer-formation remaining in the battery is not a concern. Because there are no restrictions on the amounts and types of precursor used, formation of the SEI layer can be precisely controlled. In this solid-state battery, metal is deposited on the surface of a negative electrode provided with an SEI layer whose formation has been precisely controlled, and the deposited metal is dissolved thereby to perform charging and discharging. Because the SEI layer has ionic conductivity, the surface of the negative electrode forms a uniform reaction field, and metal deposited on the surface of the negative electrode grows uniformly. In other words, dendrite formation is suppressed. As a result, problems such as short-circuiting and reduced capacity due to dendrites forming on the surface of the negative electrode can be suppressed, and the cycle property of the resulting solid-state battery is improved.

The production method in this aspect of the present invention may further comprise the steps of: forming a laminate by laminating the negative electrode on which the solid electrolyte interface layer is formed, the solid electrolyte, and the positive electrode in this order so that the solid electrolyte interface layer faces the solid electrolyte; and forming a pouch by encapsulating the laminate and the electrolyte in a sealed container.

Preferably, the electrolyte comprises a lithium salt and is free of the precursor. Because SEI layer formation is suppressed during use of the solid-state battery, a solid-state battery with even better cycle property tends to be obtained. Because internal resistance in the solid-state battery is reduced further, a solid-state battery with a higher energy density and excellent cycle property can be obtained.

Preferably, the solid-state battery is a lithium secondary battery in which charging and discharging are performed by depositing lithium metal on the surface of the negative electrode with the solid electrolyte interface layer and dissolving the precipitated lithium. This aspect of the present invention makes it possible to obtain a solid-state battery with even higher energy density.

Preferably, the negative electrode is a lithium-free electrode. In this aspect of the present invention, use of highly flammable lithium metal is not required in the production process, so safety and productivity are further improved.

Preferably, lithium foil is not formed between the solid electrolyte and the negative electrode on which the solid electrolyte interface layer is formed in the solid-state battery prior to the initial charge. In this aspect of the present invention, use of highly flammable lithium metal is not required in the production process, so safety and productivity are further improved.

The precursor may be at least one selected from the group consisting of aromatic compounds, ether compounds, ester compounds, carbonic acid ester compounds, fluorine compounds, sulfone compounds, and metal complexes containing one or more of Sn, Bi, Zn, Se, Sb, Mg, Ca, Al, Na, As, and Co.

The precursor may be at least one selected from the group consisting of trimethoxybenzene, difluoroanisole, monofluorobenzene, difluorobenzene, trifluorobenzene, cumene, biphenyl, cyclohexylbenzene, diphenylpropane, terphenyl, t-amylbenzene, t-butylbenzene, triphenylene, fluorinated ethylene carbonate, difluoroethylene carbonate, chlorinated ethylene carbonate, phenyl carbonate, diphenyl carbonate, vinyl ethylene carbonate, trifluoropropylene carbonate, phosphazene, and derivatives thereof.

Preferably, a two-electrode system with a negative electrode as a working electrode and with an electrode whose standard electrode potential in a self-dissolution reaction is -1.0 V or less as a counter electrode is used in the layer forming step to cause a reduction reaction by applying a reduction current of 0.01 mA/cm² or more and 2.0 mA/cm² or less through the working electrode. This aspect of the present invention makes it possible to control the formation of the SEI layer more precisely.

The layer forming solution may also comprise an organic solvent other than the precursor.

Preferably, the amount of the precursor in the layer forming solution is 1% by mass or more and 100% by mass or less with respect to the total mass of the components of the layer-forming solution minus the lithium salt. This aspect of the present invention makes it possible to form an SEI layer that further suppresses the formation of dendrites on the surface of the negative electrode.

Preferably, the concentration of the lithium salt in the layer forming solution is 0.01 M or more and 20 M or less with respect to the layer forming solution. This aspect of the present invention makes it possible to form an SEI layer that further suppresses the formation of dendrites on the surface of the negative electrode.

The positive electrode may comprise a positive electrode active material.

Preferably, the average thickness of the solid electrolyte interface layer is 1 nm or more and 500 nm or less. This aspect of the present invention makes it possible to further suppress the formation of dendrites on the surface of the negative electrode.

Another aspect of the present invention is a solid-state battery comprising a positive electrode, a solid electrolyte, and a negative electrode that is free of a negative-electrode active material, wherein a solid electrolyte interface layer having a lithium-containing organic compound and a lithium-containing inorganic compound is formed on the negative electrode prior to the initial charge.

When a negative electrode containing no negative electrode active material is provided, metal is deposited on the surface of the negative electrode and the deposited metal is dissolved during charging and discharging. This increases the energy density. Because an SEI layer including a lithium-containing organic compound and a lithium-containing inorganic compound is formed on the negative electrode prior to the initial charge, an SEI layer whose formation has been precisely controlled can be obtained. In this solid-state battery, metal is deposited on the surface of a negative electrode provided with an SEI layer whose formation has been precisely controlled, and the deposited metal is dissolved thereby to perform charging and discharging. Because the SEI layer has ionic conductivity, the surface of the negative electrode forms a uniform reaction field, and metal deposited on the surface of the negative electrode grows uniformly. In other words, dendrite formation is suppressed. As a result, problems such as short-circuiting and reduced capacity due to dendrites forming on the surface of the negative electrode can be suppressed, and the cycle property of the resulting solid-state battery is excellent.

Preferably, the solid-state battery is a lithium secondary battery in which charging and discharging are performed by depositing lithium metal on the surface of the negative electrode with the solid electrolyte interface layer and dissolving the precipitated lithium. In this aspect of the present invention, the energy density is further increased.

Preferably, the negative electrode is a lithium-free electrode. In this aspect of the present invention, use of highly flammable lithium metal is not required in the production process, so safety and productivity are further improved.

Preferably, lithium foil is not formed between the solid electrolyte and the negative electrode on which the solid electrolyte interface layer is formed prior to the initial charge. In this aspect of the present invention, use of highly flammable lithium metal is not required in the production process, so safety and productivity are further improved.

### Effect of Invention

The present invention is able to provide a solid-state battery having high energy density and improved cycle property and a production method for the solid-state battery.

### Brief Description of Drawings

Fig. 1 is a schematic diagram of the solid-state battery in an embodiment.
Fig. 2 is a schematic diagram of the solid-state battery in this embodiment during use.
Fig. 3 is a flowchart showing the production process for the solid-state battery in this embodiment
Fig. 4 is a schematic diagram of a step in the production method for this embodiment.
Fig. 5 is a schematic diagram of the step of forming the solid electrolyte interface layer in the production method for this embodiment.

### Description of Embodiments

Embodiments of the present invention ("embodiments") will now be described with reference to the drawings when necessary. In the drawings, identical elements are designated by the same reference numbers, and redundant descriptions of these elements has been omitted. Positional relationships such as up, down, left, and right are based on the positional relationship shown in the drawings unless otherwise specified. The dimensional ratios shown in the drawings are not limited to the depicted ratios.

### Solid-State Battery

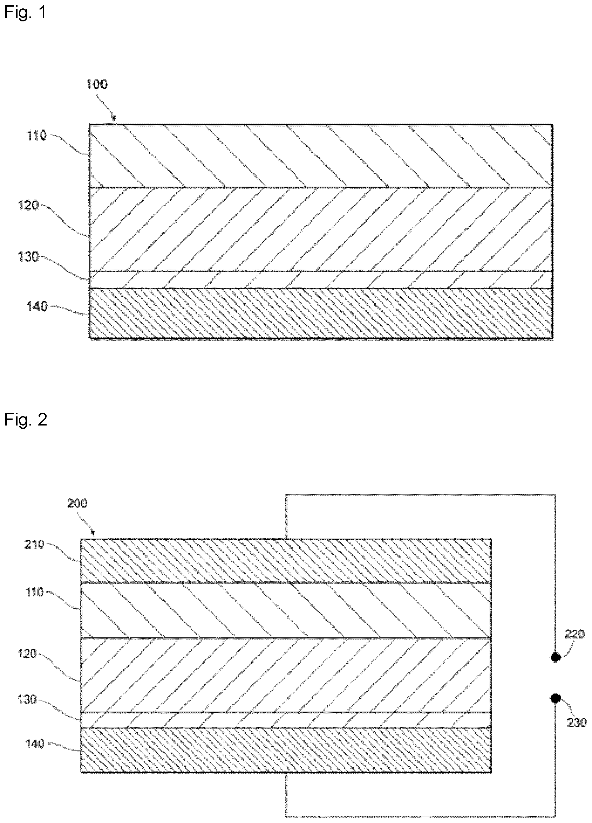

The solid-state battery 100 in the present embodiment shown in Fig. 1 includes a positive electrode 110, a solid electrolyte 120, and a negative electrode 140 that is free of a negative electrode active material. A solid electrolyte interface layer (SEI layer) 130 including a lithium-containing organic compound and a lithium-containing inorganic compound is formed on the negative electrode 140 prior to the initial charge.

### Positive Electrode

There are no particular restrictions on the positive electrode 110 and it can be any material commonly used in solid-state batteries. This can be selected depending on the intended application for the solid-state battery and the type of carrier metal used. From the standpoint of increasing the stability and output voltage of the solid-state battery 100, the positive electrode 110 preferably contains a positive electrode active material.

In the present specification, "positive electrode active material" refers to the substance in the battery used to hold the metal ions serving as the charge carrier or the metal ("carrier metal") corresponding to these metal ions, and is also referred to as the carrier metal host substance.

Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphate include, but are not limited to, iron phosphate-based compounds and cobalt phosphate-based compounds. When the carrier metal is lithium ions, typical examples of positive electrode active materials include LiCoO₂, LiNiₓCo_{y}Mn_{z}O₂ (x + y + z = 1), LiNiₓMn_{y}O₂ (x + y = 1), LiNiO₂, LiMn₂O₄, LiFePO₄, LiCoPO₄, FeF₃, LiFeOF, LiNiOF, and TiS₂. The positive electrode active materials mentioned above can be used alone or in combinations of two or more.

The positive electrode 110 may contain components other than a positive electrode active material. Examples of these components include, but are not limited to, commonly used conductive aids, binders, solid polymer electrolytes, and inorganic solid electrolytes.

Examples of conductive aids that can be used include carbon black, single-wall carbon nanotubes (SW-CNT), multi-wall carbon nanotubes (MW-CNT), carbon nanofibers, and acetylene black. Examples of binders include polyvinylidene fluoride (PVDF), polytetrafluoroethylene (PTFE), styrene butadiene rubber (SBR), acrylic resins, and polyimide resins.

The amount of positive electrode active material in the positive electrode 110 may be, for example, 50% by mass or more and 100% by mass or less with respect to the entire mass of the positive electrode 110. The amount of conductive aid may be, for example, 0.5% by mass or more and 30% by mass or less with respect to the entire mass of the positive electrode 110. The amount of binder may be, for example, 0.5% by mass or more and 30% by mass or less with respect to the entire mass of the positive electrode 110. The total amount of solid polymer electrolyte and inorganic solid electrolyte may be, for example, 0.5% by mass or more and 30% by mass or less with respect to the entire mass of the positive electrode 110.

### Negative Electrode

The negative electrode 140 does not contain a negative electrode active material. It is difficult to increase the energy density of a solid-state battery with a negative electrode containing a negative electrode active material due to the presence of the negative electrode active material. On the other hand, because the solid-state battery 100 in the present embodiment has a negative electrode 140 that does not contain a negative electrode active material, this problem does not occur. The solid-state battery 100 in the present embodiment has a high energy density because charging and discharging are performed by depositing metal on the surface of the negative electrode 140 and dissolving the deposited metal.

In the present specification, "negative electrode active material" refers to a substance holding the carrier metal on the negative electrode, and may also be referred to as the carrier metal host material. Examples of holding mechanisms include, but are not limited to, intercalation, alloying, and occlusion of metallic clusters.

Examples of negative electrode active materials include, but are not limited to, carbon-based substances, metal oxides, metals, and alloys. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. There are no particular restrictions on the metal or alloy as long as it can be alloyed with the carrier metal. Examples include silicon, germanium, tin, lead, aluminum, gallium, and alloys containing these.

There are no particular restrictions on the negative electrode 140 as long as it does not contain a negative electrode active material and can be used as a current collector. Examples include metals such as Cu, Al, Ni, Mg, Ti, Au, Ag, Pt, Pd and In, alloys containing these metals, stainless steel, and metal oxides such as fluorine-doped tin oxide (FTO), antimony-doped tin oxide (ATO), and tin-doped indium oxide (ITO). The negative electrode materials mentioned above can be used alone or in combinations of two or more.

The negative electrode 140 is preferably a lithium-free electrode. In this aspect of the present invention, the solid-state battery 100 has increased safety and productivity because use of a highly flammable lithium metal is not required during production. From this standpoint, the negative electrode 140 is preferably Cu or an alloy containing Cu.

### Solid Electrolyte

The solid-state battery 100 includes a solid electrolyte 120. In a battery containing a liquid electrolyte, the physical pressure applied by the electrolyte to the surface of the negative electrode tends to vary locally due to fluctuations in the liquid. Because the solid-state battery 100 includes a solid electrolyte 120, the pressure applied by the solid electrolyte 120 to the surface of the negative electrode 140 is more uniform, and formation of dendrites on the surface of the negative electrode 140 can be further suppressed.

There are no particular restrictions on the solid electrolyte 120 as long as it is commonly used as a solid electrolyte in a solid battery. A commonly used material can be selected based on the intended application of the solid-state battery and the type of carrier metal used. Preferably, the solid electrolyte 120 has ionic conductivity and no electron conductivity. When the solid electrolyte 120 has ionic conductivity and no electron conductivity, internal resistance in the solid-state battery 100 can be further reduced and short-circuiting inside the solid-state battery 100 can be further suppressed. As a result, the solid-state battery 100 has a higher energy density and more excellent cycle property.

There are no particular restrictions on the solid electrolyte 120, which may include, for example, resins and lithium salts. Resins include, but are not limited to, resins having an ethylene oxide unit in the main chain and/or a side chain, acrylic resins, vinyl resins, ester resins, nylon resins, polysiloxanes, polyphosphazene, polyvinylidene fluoride, polymethyl methacrylate, polyamides, polyimides, aramids, polylactic acid, polyethylenes, polystyrenes, polyurethanes, polypropylenes, polybutylenes, polyacetals, polysulfones, and polytetrafluoroethylene. These resins can be used alone or in combinations of two or more.

Examples of lithium salts that can be used in the solid electrolyte 120 include, but are not limited to, Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNO₃, and Li₂SO₄. These lithium salts can be used alone or in combinations of two or more.

Generally, the ratio of resin to lithium salt in the solid electrolyte is determined by the ratio of oxygen atoms in the resin to lithium atoms in the lithium salt ([Li]/[O]). In the solid electrolyte 120 of the present embodiment, the ([Li]/[O]) ratio is preferably 0.02 or more and 0.20 or less, more preferably 0.03 or more and 0.15 or less, and even more preferably 0.04 or more and 0.12 or less.

The solid electrolyte 120 may contain components other than the resins and lithium salts mentioned above. These components include, but are not limited to, solvents and salts other than lithium salts. Examples of salts other than lithium salts include, but are limited to, Na, K, Ca, and Mg salts.

Solvents include, but are not limited to, dimethyl ether, diethylene glycol dimethyl ether, triethylene glycol dimethyl ether, acetonitrile, dimethyl carbonate, diethyl carbonate, ethylmethyl carbonate, ethylene carbonate, propylene carbonate, chloroethylene carbonate, fluoroethylene carbonate, difluoroethylene carbonate, trifluoromethylpropylene carbonate, methylacetate, ethylacetate, propylacetate, methylpropionate, ethylpropionate, nonafluorobutylmethyl ether, nonafluorobutylethyl ether, tetrafluoroethyltetrafluoropropyl ether, triethyl phosphate, and triethyl phosphate.

The solid electrolyte 120 preferably does not contain a precursor used to form the SEI layer (simply "precursor" below), which will be described later. When the solid electrolyte 120 does not contain a precursor, SEI layer formation can be suppressed during use of the solid electrolyte 100, and a solid-state battery 100 with even better cycle property tends to be obtained. Therefore, when the solid electrolyte 120 contains an organic solvent, it preferably contains an organic solvent other than a precursor. Examples of organic solvents other than the precursor include those that can be included in the layer forming solution 510 described later.

In the present specification, "solid electrolyte" includes gel electrolytes. Gel electrolytes include, but are not limited to, those containing polymers, organic solvents, and lithium salts. Polymers that can be used in a gel electrolyte include, but are not limited to, copolymers of polyethylene and/or polyethylene oxide, polyvinylidene fluoride (PVDF), and copolymers of polyvinylidene fluoride (PVDF) and hexafluoropropylene (HFP).

### Solid Electrolyte Interface Layer

The solid-state battery 100 is believed to have high energy density and excellent cycle property because a solid electrolyte interface layer (SEI layer) 130 including a lithium-containing organic compound and a lithium-containing inorganic compound is formed on the negative electrode 140 prior to the initial charge.

In conventional solid-state batteries, especially lithium-ion secondary batteries, the SEI layer is not formed on the negative electrode before the battery is assembled. In these batteries, a precursor for SEI layer formation is added to the solid electrolyte and/or electrolyte during battery assembly, and the SEI layer is formed inside the battery during initial charging of the battery. In the conventional method of adding a precursor to the electrolytic solution inside the battery, precursor that did not react during the initial charge remains in the electrolyte, and the residual precursor affects the performance of the battery. In some solid-state batteries with unreacted precursor remaining in the electrolyte, the residual precursor may form an SEI layer again, the SEI layer may become too thick, and the electric capacity may decline. In other words, solid-state batteries in which unreacted precursor remains in the electrolyte experiences problems with inferior cycle property. Therefore, in conventional solid-state batteries, particularly lithium ion secondary batteries, the amount and type of the precursor has to be limited from the standpoint of preventing the presence of residual precursor inside the battery after the initial charge.

Here, the amount and type of precursor have to be adjusted in order to form a high-quality SEI layer. Thus, in the conventional solid-state battery production method mentioned above, it is difficult to form a high-quality SEI layer because of the limits placed on the amount and type of precursor used. However, the solid-state battery 100 of the present invention can be prepared with an SEI layer 130 whose formation has been controlled precisely because an SEI layer 130 including a lithium-containing organic compound and a lithium-containing inorganic compound is formed on the negative electrode 140 prior to the initial charge. Also, because a precursor does not have to be added to the battery, the problem of inferior cycle property incurred by conventional batteries due to the presence of residual precursor can be solved.

In this solid-state battery 100, metal is deposited on the surface of a negative electrode 140 provided with an SEI layer 130 whose formation has been precisely controlled, and the deposited metal is dissolved thereby to perform charging and discharging. Because the SEI layer 130 has ionic conductivity, the surface of the negative electrode 140 forms a uniform reaction field, and metal deposited on the surface of the negative electrode 140 grows uniformly. In other words, dendrite formation is suppressed. As a result, problems such as short-circuiting and reduced capacity due to dendrites forming on the surface of the negative electrode 140 can be suppressed, and the cycle property of the resulting solid-state battery is excellent.

In this solid-state battery 100, the SEI layer 130 suppresses the reduction reaction of components in the solid electrolyte 120 on the negative electrode 140, reduces irreversible metal ions caused by the reduction, and suppresses the production of gas due to decomposition of the solid electrolyte 120. As a result, the solid-state battery 100 has excellent cycle property. Because the SEI layer 130 also assists in the transport of metal ions between the negative electrode 140 and the solid electrolyte 120, the solid-state battery 100 has a high energy density.

The SEI layer 130 includes a lithium-containing organic compound and a lithium-containing inorganic compound. There are no particular restrictions on the lithium-containing organic compounds and lithium-containing inorganic compounds, which can be those commonly used in conventional SEI layers. Lithium-containing organic compounds include, but are not limited to, lithium alkyl carbonates, lithium alkoxides, and lithium alkyl esters. Lithium-containing inorganic compounds include, but are not limited to, LiF, Li₂CO₃, Li₂O, LiOH, lithium boric acid compounds, lithium phosphoric acid compounds, lithium sulfuric acid compounds, lithium nitric acid compounds, lithium nitrous acid compounds, and lithium sulfurous acid compounds.

There are no particular restrictions on the average thickness of the SEI layer 130, which may be, for example, 1 nm or more and 1000 nm or less, 10 nm or more and 800 nm or less, or 100 nm or more and 500 nm or less. From the standpoint of further suppressing the formation of dendrites on the surface of the negative electrode 140, the average thickness of the SEI layer 130 is preferably 1 nm or more and 500 nm or less.

Because the solid-state battery 100 has the features described above, it has a high energy density and the excellent cycle property described below. First, while it is difficult to increase the energy density of a solid-state battery including a negative electrode containing a negative electrode active material due to the presence of the negative electrode active material, the solid-state battery 100 in the present embodiment includes a negative electrode 140 that does not contain a negative electrode active material, so this problem does not occur. In other words, the solid-state battery 100 in the present embodiment has a high energy density because metal is deposited on the surface of the negative electrode 140 and the deposited metal is dissolved thereby to perform charging and discharging.

Second, because an SEI layer 130 including a lithium-containing organic compound and a lithium-containing inorganic compound is formed on the negative electrode 140 prior to the initial charge, the solid-state battery 100 can be provided with an SEI layer 130 whose formation is precisely controlled. Also, because a precursor does not have to be added to the battery, the problem of inferior cycle property incurred by conventional batteries due to the presence of residual precursor can be solved.

Third, in this solid-state battery 100, metal is deposited on the surface of a negative electrode 140 provided with an SEI layer 130 whose formation has been precisely controlled, and the deposited metal is dissolved thereby to perform charging and discharging. Because the SEI layer 130 has ionic conductivity, the surface of the negative electrode 140 forms a uniform reaction field, and metal deposited on the surface of the negative electrode 140 grows uniformly. In other words, dendrite formation is suppressed. As a result, problems such as short-circuiting and reduced capacity due to dendrites forming on the surface of the negative electrode 140 can be suppressed, and the cycle property of the resulting solid-state battery is excellent.

Fourth, because the solid-state battery 100 in the present embodiment includes a solid electrolyte 120, the pressure applied to the surface of the negative electrode 140 from the solid electrolyte 120 is more uniform than that of a battery using an electrolytic solution, and the formation of dendrites on the surface of the negative electrode 140 can be further suppressed. As a result, problems such as short-circuiting and capacity loss due to the formation of dendrites on the negative electrode 140 can be suppressed, and the resulting cycle property is excellent.

### Use of Solid-State Battery

Fig. 2 is a schematic diagram showing one use for the solid-state battery in the present embodiment. The solid-state battery 200 comprises a positive electrode 110, a solid electrolyte 120, a solid electrolyte interface layer (SEI layer) 130, a negative electrode 140 that is free of a negative electrode active material, and a positive electrode current collector 210 bonded to the positive electrode 110. A positive electrode terminal 220 and a negative electrode terminal 230 used to connect to an external circuit are joined to the positive electrode current collector 210 and the negative electrode 140. In the solid-state battery 200, the SEI layer 130 is formed prior to the initial charge.

The solid-state battery 200 is charged by applying voltage between the positive electrode terminal 220 and the negative electrode terminal 230 so that current flows from the negative electrode terminal 230 to the positive electrode terminal 220 via an external circuit. By charging the solid battery 200, a carrier metal is deposited at the interface between the negative electrode 140 and the solid electrolyte interface layer (SEI layer) 130 and/or at the interface between the solid electrolyte interface layer (SEI layer) 130 and the solid electrolyte 120. The precipitated carrier metal is kept from growing in a dendrite-like form due to the influence of the solid electrolyte interface layer (SEI layer) 130, and typically grows on thin film.

When the positive electrode terminal 220 and the negative electrode terminal 230 in the charged solid-state battery 200 are connected, the solid-state battery 200 discharges. The precipitate of the carrier metal produced at the interface between the negative electrode 140 and the solid electrolyte interface layer (SEI layer) 130 and/or at the interface between the solid electrolyte interface layer (SEI layer) 130 and the solid electrolyte 120 is dissolved.

### Solid-State Battery Production Method

One aspect of the present invention is a method for producing a solid-state battery containing a positive electrode, a solid electrolyte, and a negative electrode, the method comprising the steps of: preparing a negative electrode that is free of a negative-electrode active material; and forming, on at least one surface of the negative electrode, a solid electrolyte interface layer including a lithium-containing organic compound and a lithium-containing inorganic compound by immersing the negative electrode in a layer forming solution containing a lithium salt and a precursor to cause a reduction reaction on the surface of the negative electrode. The solid-state battery 100 shown in Fig. 1 and described above is produced as follows.

### Negative Electrode Preparation Step

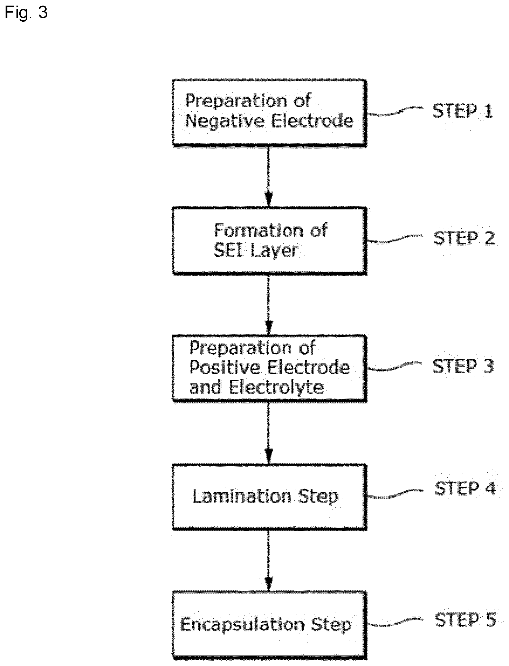

As shown in Fig. 3, the negative electrode 140 described above is prepared first (step 1 or the "negative electrode preparation step"). The negative electrode preparation step is the step in which the negative electrode 140 is prepared for the layer formation step (step 2). Specifically, it may include molding the negative electrode material into a negative electrode 140 by cutting or punching the negative electrode material described above to a predetermined size, and/or cleaning the negative electrode 140.

In the negative electrode preparation step, the negative electrode 140 may be prepared by washing metal foil with a thickness of 1 µm or more and 1 mm or less (for example, electrolytic Cu foil) with a solvent containing sulfamic acid, punching the washed foil to a predetermined size, cleaning the foil using ultrasonic cleaning with ethanol, and then drying the clean foil.

### Layer Formation Step

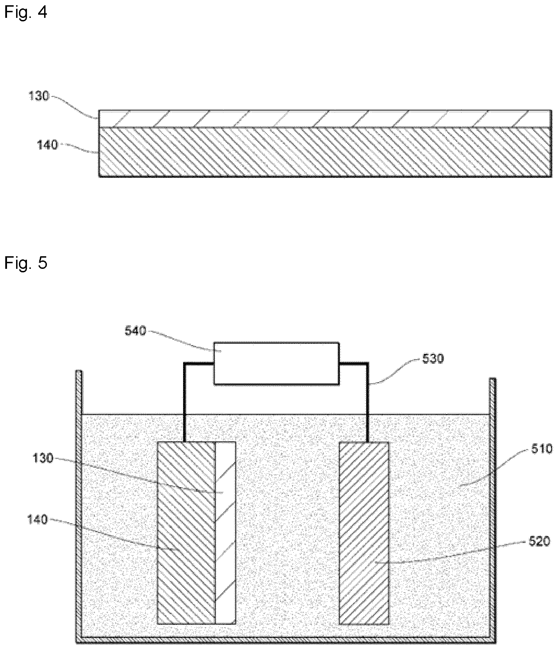

Next, as shown in Fig. 4, an SEI layer 130 is formed on the negative electrode 140 (step 2 or the "layer formation step"). In the layer formation step, an SEI layer 130 having a lithium-containing organic compound and a lithium-containing inorganic compound is formed on one side of the negative electrode 140 as shown in Fig. 4 by immersing the negative electrode 140 in a layer forming solution containing a lithium salt and a precursor, and then conducting a reduction reaction on the surface of the negative electrode 140. In the production method of the present embodiment, the SEI layer 130 is formed before assembly of the solid-state battery 100, so there are no restrictions on the amount and type of precursor used. Therefore, by adjusting the amount and type of the precursor, formation of the SEI layer 130 can be precisely controlled, and the desired physical properties can be imparted to the SEI layer 130. Particularly, an SEI layer 130 formed in the layer formation step of the production method in this embodiment can further suppress the formation of dendrites on the surface of the negative electrode 140. Also, because a precursor does not have to be added to the solid-state battery 100, the problem of inferior cycle property incurred by conventional batteries due to the presence of residual precursor can be solved.

In the layer formation step, an SEI layer 130 is formed as shown in Fig. 5 by immersing the negative electrode 140 and a counter electrode 520 in a layer forming solution 510, connecting the negative electrode 140 serving as a working electrode to the counter electrode 520 via a lead wire 530 and an electrochemical measuring device 540, and conducting an electrochemical reduction reaction on the surface of the negative electrode 140. When this method is used, the reduction reaction on the surface of the negative electrode 140 can be precisely controlled, and the formation of the SEI layer 130 can be precisely controlled. Specifically, the composition, density, and thickness of the SEI layer 130 to be formed can be controlled by adjusting the amount of voltage applied between the negative electrode 140 and the counter electrode 520, the amount of reduction current flowing through the negative electrode 140, the composition of the layer forming solution 510, and the reaction time.

In the layer formation step, the SEI layer 130 may be formed under conditions in which the electrochemical measuring device 540 is controlled so that the voltage applied between the negative electrode 140 and the counter electrode 520 is constant ("potentiostatic formation"), the SEI layer 130 may be formed under conditions in which the reduction current flowing through the negative electrode 140 of the electrochemical measuring device 540 is controlled so as to remain constant ( "galvanostatic formation"), or the layer may be formed by combining potentiostatic formation with galvanostatic formation.

In potentiostatic formation, applied voltage may be determined using the following method. Specifically, the voltage at which the reduction reaction occurs on the surface of the negative electrode 140 may be obtained by sweeping the applied voltage, and this voltage is set as the applied voltage. The range for sweeping the applied voltage may be adjusted to the counter electrode that is used.

In galvanostatic formation, from the standpoint of more precise formation of the SEI layer 130, the reduction current is preferably 0.01 mA/cm² or more and 2.0 mA/cm² or less, more preferably 0.05 mA/cm² or more and 1.5 mA/cm² or less, and even more preferably 0.1 mA/cm² or more and 1.0 mA/cm² or less.

There are no particular restrictions on the range for the reaction time of the electrochemical reduction reaction, which may be 5 minutes or more and 20 hours or less, 10 minutes or more and 10 hours or less, or 30 minutes or more and 6 hours or less. The reaction time can be adjusted to the reaction conditions for the electrochemical reduction reaction, and may be adjusted based on, for example, the amount of reaction electrons (coulomb amount of reaction). From the standpoint of forming an SEI layer 130 that can further suppress the formation of dendrites on the surface of the negative electrode 140, the amount of reaction electrons (coulomb amount of reaction) is preferably 0.1 C/cm² or more and 5.0 C/cm² or less, and more preferably 0.5 C/cm² or more and 2.0 C/cm² or less.

More specifically, when the SEI layer 130 is formed by galvanostatic formation, the following may be performed. The negative electrode 140 (for example, Cu or a Cu alloy) is used as the working electrode, an electrode whose standard electrode potential in a self-dissolution reaction is -1.0 V or less (for example, Li, K, Ca, Na, Mg, and Al) is used as the counter electrode 520, and the electrodes are connected via an electrochemical measuring device 540 and a lead wire 530. By immersing the electrodes in the layer forming solution 510 while applying a steady-state reduction current of 0.01 mA/cm² or more and 2.0 mA/cm² or less, an SEI layer 130 is formed on the negative electrode 140. The electrochemical reduction reaction is terminated using an open circuit voltage for the negative electrode 140 relative to the counter electrode of 0.5 V or more and 2.0 V or less as a guide.

From the standpoint of controlling formation of the SEI layer 130 more precisely, the layer forming step is preferably performed by combining galvanostatic formation with potentiometric formation. Specifically, first, the negative electrode 140 (for example, Cu or a Cu alloy) is used as the working electrode, an electrode whose standard electrode potential in a self-dissolution reaction is -1.0 V or less (for example, Li, K, Ca, Na, Mg, and Al) is used as the counter electrode 520, and the electrodes are connected via an electrochemical measuring device 540 and a lead wire 530. After immersing the electrodes in the layer forming solution 510, a steady-state reduction current of 0.01 mA/cm² or more and 2.0 mA/cm² or less is applied while monitoring the open circuit voltage. Immediately after confirming that the SEI layer formation reaction has begun to occur, the system is switched to potentiostatic mode, and an SEI layer is formed for 5 minutes to 10 hours, 10 minutes to 8 hours, 30 minutes to 6 hours, or 1 hour to 5 hours while maintaining the open circuit voltage.

Whether or not the SEI layer formation reaction has occurred can be confirmed based on the value of the open circuit voltage being monitored. When a reduction current is applied to the working electrode in the galvanostatic mode, the open circuit voltage gradually decreases. However, when the SEI layer formation reaction begins to occur, the decline in the open circuit voltage becomes more gradual. Therefore, the open circuit voltage was monitored, and the point at which the SEI layer formation reaction began was set as the point at which the rate of decline slowed. The open circuit voltage at this point was used in the potentiostatic mode.

The precursor used in the layer formation step can be any precursor commonly used to form an SEI layer 130 including a lithium-containing organic compound and a lithium-containing inorganic compound. There are no particular restrictions. From the standpoint of forming an SEI layer 130 that can further suppress the formation of dendrites on the surface of the negative electrode 140, the precursor is at least one type selected from the group consisting of aromatic compounds, ether compounds, ester compounds, carbonic acid ester compounds, fluorine compounds, sulfone compounds, and metal complexes containing one or more of Sn, Bi, Zn, Se, Sb, Mg, Ca, Al, Na, As, and Co. From the same standpoint, the precursor may be at least one type selected from the group consisting of trimethoxybenzene, difluoroanisole, monofluorobenzene, difluorobenzene, trifluorobenzene, cumene, biphenyl, cyclohexylbenzene, diphenylpropane, terphenyl, t-amylbenzene, t-butylbenzene, triphenylene, fluorinated ethylene carbonate, difluoroethylene carbonate, chlorinated ethylene carbonate, phenyl carbonate, diphenyl carbonate, vinyl ethylene carbonate, trifluoropropylene carbonate, phosphazene, and derivatives thereof. From the same standpoint, the precursor is more preferably fluorinated ethylene carbonate (FEC), fluorobenzene (FBZ), biphenyl (BPY), or diphenylethane (BPE).

The layer forming solution 510 may also contain an organic solvent other than the precursor. There are no particular restrictions on the organic solvent other than the precursor, which may be a chlorinated solvent, a brominated solvent, or an iodinated solvent. Among ether-based organic solvents, ester-based organic solvents, carbonic acid ester-based organic solvents, and amide-based organic solvents, organic solvents other than the precursor include solvents that do not fall under what was described above as precursor.

The amount of the precursor in the layer forming solution 510 is preferably 1% by mass or more, more preferably 5% by mass or more, and even more preferably 15% by mass or more, with respect to the overall mass of the components in the layer forming solution 510 minus the lithium salt. When the amount of precursor is within this range, an SEI layer 130 can be formed that further suppresses the formation of dendrites on the surface of the negative electrode 140. There are no particular restrictions on the upper limit for the amount of precursor in the layer forming solution 510 with respect to the overall mass of the components in the layer forming solution 510 minus the lithium salt, which may be 100% by mass, 90% by mass, or 80% by mass.

The concentration of lithium salt in the layer forming solution 510 with respect to the entire layer forming solution 510 is preferably 0.01 M or more and 20 M or less, more preferably 0.1 M or more and 15 M or less, and even more preferably 0.5 M or more and 10 M or less. When the concentration of lithium salt is in this range, an SEI layer 130 can be formed that further suppresses the formation of dendrites on the surface of the negative electrode 140.

### Positive Electrode and Solid Electrolyte Preparation and Lamination Steps

Next, as shown in FIG. 3, the positive electrode 110 is prepared (step 3). There are no particular restrictions on the method used to produce the positive electrode 110 as long as it can obtain the positive electrode 110 described above. For example, a positive electrode mixture obtained by mixing a positive electrode active material, a known conductive additive, and a known binder together may be applied to one side of metal foil (for example, Al foil) with a thickness of, for example, 5 µm or more and 1 mm or less, and press-molded. Alternatively, a commercially available positive electrode for a solid-state battery may be used.

Also, as shown in Fig. 3, a solid electrolyte 120 is prepared (step 3). There are no particular restrictions on the method used to produce the solid electrolyte 120 as long as it can obtain the solid electrolyte 120 described above. For example, the following method may be used. A resin commonly used in a solid electrolyte (such as the resins mentioned above that can be included in the solid electrolyte 120) and a lithium salt mentioned above are dissolved in an organic solvent. The resulting solution is then cast on a molding substrate to a predetermined thickness in order to obtain a solid electrolyte 120. Here, the amounts of resin and lithium salt mixed together may be determined based on the ([Li]/[O]) ratio of the oxygen atoms in the resin to the lithium atoms in the lithium salt, as described above. The ([Li]/[O]) ratio is, for example, 0.02 or more and 0.20 or less. There are no particular restrictions on the organic solvent, which may be, for example, acetonitrile. There are no particular restrictions on the molding substrate, which may be, for example, PET film or a glass substrate. There are no particular restrictions on the thickness of the resulting solid electrolyte 120, which may be, for example, 10 µm or more and 100 µm or less.

Next, as shown in Fig. 3, the negative electrode 140 on which an SEI layer 130 has been formed in the manner described above, the solid electrolyte 120, and the positive electrode 110 are laminated in this order so that the SEI layer 130 and the solid electrolyte 120 face each other (step 4 or the "lamination step"). A solid-state battery 100 including a positive electrode 110, a solid electrolyte 120, an SEI layer 130, and a negative electrode 140 as shown in Fig. 1 can be reliably obtained by including this step.

### Encapsulation Step

Next, as shown in Fig. 3, a pouch is obtained by enclosing the laminate obtained in the lamination step and the electrolyte in a sealed container, and this completes the solid-state battery 100 (step 5 or the "encapsulation step"). By encapsulating the laminate with an electrolyte in this way, the internal resistance of the solid-state battery 100 is further reduced, and a solid-state battery having a higher energy density and excellent cycle property tends to be obtained.

The electrolyte in the encapsulation step preferably contains a lithium salt and no precursor. When the electrolyte does not contain a precursor, the continued formation of the SEI layer during use of the solid-state battery 100 can be suppressed, and a solid-state battery with even better cycle property can be obtained. When the electrolyte contains a lithium salt, the internal resistance of the solid-state battery 100 is further reduced and a solid-state battery with a higher energy density and excellent cycle property can be obtained.

The electrolyte may contain components other than a lithium salt as long as the effects of the present embodiment are not impaired. There are no particular restrictions on these components, which may be an organic solvent other than the precursor and a salt other than a lithium salt. There are no particular restrictions on salts other than lithium salts, which may be Na, K, Ca, and Mg salts. Organic solvents other than the precursor include any of those that can be included in the layer forming solution 510.

There are no particular restrictions on the sealed container in the encapsulation step, which can be, for example, laminate film.

### Modifications

An embodiment was provided as an example to explain the present invention.

For example, the solid-state battery may be provided with SEI layers on both sides of the negative electrode, which is obtained by forming SEI layers on both sides of the negative electrode in the layer formation step, and a positive electrode may be placed on the surface of each SEI layer opposite the surface facing the negative electrode. A two-layer solid-state battery tends to have a higher energy density.

The solid-state battery in the embodiment may be a solid-state secondary battery. Also, the solid-state battery is a lithium secondary battery in which charging and discharging are performed by depositing lithium metal on the surface of the negative electrode with the SEI layer and dissolving the deposited lithium. From the standpoint of effectively and reliably realizing the effects of the embodiment, the solid-state battery is preferably a solid-state secondary battery, and more preferably a lithium secondary battery in which charging and discharging are performed by depositing lithium metal on the surface of the negative electrode with the SEI layer and dissolving the precipitated lithium.

The solid-state battery may not have lithium foil formed between the solid electrolyte and the negative electrode on which an SEI layer has been formed prior to the initial charge. When no lithium foil is formed between the solid electrolyte and the negative electrode on which an SEI layer has been formed prior to initial charging, use of highly flammable lithium metal is not required in the production process, so safety and productivity are further improved.

The reduction reaction in the layer formation step of the production method in the embodiment may be any method common in the art. This may be, but is not limited to, a reduction reaction using a reducing agent. When a reduction reaction using a reducing agent is used in the layer formation step, an SEI layer may be formed on the negative electrode by immersing the negative electrode in the layer forming solution described above, and then adding the appropriate amount of a suitable reducing agent.

When a reduction reaction using a reducing agent is used in the layer formation step, the reaction conditions can be adjusted to obtain an SEI layer with the desired properties. A two-electrode system and a three-electrode system may be used as long as a reduction reaction occurs on the negative electrode.

The production method in the embodiment may include a step for stabilizing the SEI layer and a step for cleaning the negative electrode after the layer formation step. There are no particular restrictions on the step for stabilizing the SEI layer, which may be a step in which the negative electrode is immersed in a solution containing an organic solvent or an acid after formation of the SEI layer. When the production method in the embodiment includes this step, the effects of the embodiment tend to be more effectively and reliably realized.

In the production method in the embodiment, terminals to be connected to an external circuit may be mounted on the positive electrode and the negative electrode after the lamination step. For example, metal terminals of 10 µm or more and 1 mm or less (for example, Al, Ni, etc.) may be bonded to one or both of the positive electrode and the negative electrode. The bonding method may be any method common in the art, such as ultrasonic welding.

In the lamination step of the production method in the present embodiment, a plurality of negative electrodes, solid electrolytes, and positive electrodes on which an SEI layer has been formed may be laminated. In other words, a negative electrode on which an SEI layer has been formed, a solid electrolyte, and a positive electrode may be formed as a set, and two or more sets may be laminated. In this aspect of the present invention, a high voltage solid-state battery can be obtained.

The production method in the present embodiment may include an encapsulation step or the laminate obtained in the lamination step may be simply used as the solid-state battery. The productivity of the production method is increased when an encapsulation step is not included.

In the present specification, "suppressing the formation of dendrites on the surface of the negative electrode" means keeping the carrier metal precipitates formed on the surface of the negative electrode from becoming dendrite-like due to repeated charging and discharging of the solid-state battery. In other words, it means inducing carrier metal precipitates formed on the surface of the negative electrode to grow in a non-dendritic form during charging and discharging or repeated charging and discharging of the solid-state battery. Here, the "non-dendrite form" typically includes a plate-like form, peak-like form and valley-like form.

In the present specification, "the energy density is high" and "high energy density" mean the capacity is high with respect to the total volume or total mass of the battery. This is preferably 900 Wh/L or more or 400 Wh/kg or more, and more preferably 1000 Wh/L or more or 430 Wh/kg or more.

In the present specification, "excellent in cycle property" means that the rate of decline in battery capacity is low after a number of charge/discharge cycles that can be expected during normal use. In other words, when comparing the initial capacity to the capacity after the number of charge/discharge cycles that can be expected during normal use, the capacity after the charge/discharge cycles has declined significantly relative to the initial capacity. Here, the "number of times that can be expected during normal use" can be, for example, 50 times, 100 times, 500 times, 1,000 times, 5,000 times, or 10,000 times, depending on the application for the solid-state battery. "The capacity has declined significantly after the charge/discharge cycles relative to the initial capacity" depends on the application for the solid-state battery. For example, it may mean that the capacity after the charge/discharge cycles is 65% or more, 70% or more, 75% or more, 80% or more, or 85% or more of the initial capacity.

### Examples

The following is a more detailed description of the present invention with reference to examples and comparative examples. The present invention is not limited in any way by these examples.

### Example 1

First, 6 µm electrolytic Cu foil was washed with a solvent containing sulfamic acid, punched to a size of 4.5 cm × 4.5 cm, washed ultrasonically with ethanol, and then dried to obtain a negative electrode. Also, 10% by mass of fluorinated ethylene carbonate ("FEC") was added to a dimethoxyethane ("DME") solution of 4M LiN(SO₂F)₂ ("LFSI") and the components were mixed together to prepare a layer forming solution. The prepared negative electrode as a working electrode was connected to an electrochemical measuring device with lithium metal foil as a counter electrode, both of the electrodes were immersed in the prepared layer forming solution, and an SEI layer was formed on one side of the negative electrode under the conditions described below. Afterwards, the negative electrode on which an SEI layer has been formed was taken out of the layer forming solution, and the layer forming solution was dried in a dry atmosphere.

### SEI Layer Formation Conditions

First, while monitoring the open circuit voltage, a reduction current of 0.05 mA/cm² was applied to the working electrode in galvanostatic mode. Immediately after confirming that the SEI layer formation reaction had occurred, the system was switched to potentiostatic mode, and an SEI layer was formed for four hours while maintaining the open circuit voltage.

Whether or not an SEI layer formation reaction had occurred was confirmed based on the value of the open circuit voltage being monitored. When a reduction current is applied to the working electrode in galvanostatic mode, the open circuit voltage gradually decreases. However, when the SEI layer formation reaction begins to occur, the decline in the open circuit voltage becomes more gradual. Therefore, the open circuit voltage was monitored, and the point at which the SEI layer formation reaction began was set as the point at which the rate of decline slowed. The open circuit voltage at this point was used in the potentiostatic mode.

Then, a mixture of 96 parts by mass of LiNi_{0.8}Co_{0.15}Al_{0.05}O₂ as the positive electrode active material, 2 parts by mass of carbon black as a conductive aid, and 2 parts by mass of polyvinylidene fluoride (PVDF) as a binder was applied to one side of 12 µm Al foil, which was then press-molded. The resulting molded material was punched to a size of 4.0 cm × 4.0 cm to obtain a positive electrode.

Next, an ethylene oxide/ethylene glycol ether copolymer (P(EO/MEEGE)) (average molecular weight 1.5 million) and LiN(SO₂F)₂ (LFSI) were dissolved in acetonitrile in amounts resulting in a ratio ([Li]/[O]) of oxygen atoms in the resin to lithium atoms in the lithium salt of 0.07. The resulting solution was cast on a molding substrate at a predetermined thickness to obtain a solid electrolyte.

The positive electrode, solid electrolyte, and negative electrode with a formed SEI layer were then laminated in this order with the SEI layer facing the solid electrolyte to obtain a laminate. After welding a 100 µm Al terminal and a 100 µm Ni terminal to the positive electrode and the negative electrode, respectively, by ultrasonic welding, the laminate was encapsulated along with a DME solution of 4M LFSI in laminated film to obtain a solid-state battery.

### Example 2

A solid-state battery was obtained in the same manner as Example 1 except that a mixture obtained by adding 10% by mass of FEC to an ethylene carbonate ("EC")/ethyl methyl ketone ("EMC")/diethyl carbonate ("DEC") mixed solution (EC:EMC:DEC = 1:1:1 (volume ratio)) containing 1M LiPF₆ was used as the layer forming solution instead of a DME solution containing 4M LFSI (with 10% by mass FEC added).

### Example 3

A solid-state battery was obtained in the same manner as Example 1 except that a mixture obtained by adding 10% by mass of FEC to an EC/EMC/DEC mixed solution containing 1M LiBF₄ (EC:EMC:DEC = 1:1:1 (volume ratio)) was used as the layer forming solution instead of a DME solution containing 4M LFSI (with 10% by mass FEC added).

### Example 4

A solid-state battery was obtained in the same manner as Example 1 except that a mixture obtained by adding 10% by mass of FEC to an EC/EMC/DEC mixed solution containing 1M lithium difluorooxalate borate ("LiDFOB") (EC:EMC:DEC = 1:1:1 (volume ratio)) was used as the layer forming solution instead of a DME solution containing 4M LFSI (with 10% by mass FEC added).

### Example 5

A solid-state battery was obtained in the same manner as Example 1 except that a mixture obtained by adding 5% by mass of fluorobenzene ("FBZ") to an EC/EMC/DEC mixed solution containing 1M LiBF₄ (EC:EMC:DEC = 1:1:1 (volume ratio)) was used as the layer forming solution instead of a DME solution containing 4M LFSI (with 10% by mass FEC added).

### Example 6

A solid-state battery was obtained in the same manner as Example 1 except that a mixture obtained by adding 5% by mass of biphenyl ("BPY") to an EC/EMC/DEC mixed solution containing 1M LiBF₄ (EC:EMC:DEC = 1:1:1 (volume ratio)) was used as the layer forming solution instead of a DME solution containing 4M LFSI (with 10% by mass FEC added).

### Example 7

A solid-state battery was obtained in the same manner as Example 1 except that a mixture obtained by adding 5% by mass of biphenylethane ("BPE") to an EC/EMC/DEC mixed solution containing 1M LiBF₄ (EC:EMC:DEC = 1:1:1 (volume ratio)) was used as the layer forming solution instead of a DME solution containing 4M LFSI (with 10% by mass FEC added).

### Example 8

A solid-state battery was obtained in the same manner as Example 1 except that a mixture obtained by adding 10% by mass of FEC to an EC/EMC/DEC mixed solution containing 1M LiDFOB and 1M lithium bisoxalate borate ("LiBOB") (EC:EMC:DEC = 1:1:1 (volume ratio)) was used as the layer forming solution instead of a DME solution containing 4M LFSI (with 10% by mass FEC added).

### Example 9

A solid-state battery was obtained in the same manner as Example 1 except that a mixture obtained by adding 10% by mass of FEC to an EC/EMC/DEC mixed solution containing 1M LiDFOB and 1M LiSO₃CF₃ (LiTA) (EC:EMC:DEC = 1:1:1 (volume ratio)) was used as the layer forming solution instead of a DME solution containing 4M LFSI (with 10% by mass FEC added).

### Comparative Example 1

First, 6 µm electrolytic Cu foil was washed with a solvent containing sulfamic acid, punched to a size of 4.5 cm × 4.5 cm, washed ultrasonically with ethanol, and then dried to obtain a negative electrode.

A mixture of 96 parts by mass of LiNi_{0.8}Co_{0.15}Al_{0.05}O₂ as the positive electrode active material, 2 parts by mass of carbon black as a conductive aid, and 2 parts by mass of polyvinylidene fluoride (PVDF) as a binder was applied to one side of 12 µm Al foil, which was then press-molded. The resulting molded material was punched to a size of 4.0 cm × 4.0 cm to obtain a positive electrode.

Next, an ethylene oxide/ethylene glycol ether copolymer ("P(EO/MEEGE)") (average molecular weight of 1.5 million) and LiN(SO₂F)₂ ("LFSI") were dissolved in acetonitrile at a blending ratio that resulted in a ratio ([Li]/[O]) of lithium atoms in the lithium salt to oxygen atoms in the resin of 0.07. The resulting solution was cast onto a molding substrate to a predetermined thickness in order to obtain a solid electrolyte.

The positive electrode, solid electrolyte, and negative electrode were then laminated in this order to obtain a laminate. After welding a 100 µm Al terminal and a 100 µm Ni terminal to the positive electrode and the negative electrode, respectively, by ultrasonic welding, the laminate was encapsulated along with a FEC-DME mixed solution of 4M LFSI (FEC:DME = 1:9 (volume ratio)) in laminated film to obtain a solid-state battery.

### Comparative Example 2

A solid-state battery was obtained in the same manner as Comparative Example 1 except that a DME solution containing 4M LFSI was used as the electrolyte instead of an FEC-DME mixed solution of 4M LFSI (FEC:DME = 1:9 (volume ratio)).

### Evaluation of Energy Density and Cycle Property

The energy density and cycle property of the solid-state batteries produced in each of the examples and comparative examples were evaluated as follows.

The solid-state battery was charged at 7 mA until the voltage reached 4.2 V, and then discharged at 7 mA until the voltage reached 3.0 V ("initial discharge"). Then, a cycle of charging at 35 mA until the voltage reached 4.2 V and discharging at 35 mA until the voltage reached 3.0 V was repeated for 100 cycles at a temperature of 25°C. Table 1 shows the capacity obtained from the initial discharge ("initial capacity") and the capacity obtained from the discharge after 100 cycles ("capacity retention") for each example and comparative example. For comparative purposes, the initial capacity of Comparative Example 1 was used to establish the value for 100. The initial capacity of Comparative Example 1 was 70 mWh.

**Table 1**

| | Layer Formation Solution | Electrolyte | Initial Capacity (-) | Capacity Retention (-) |
|---|---|---|---|---|
| Ex. 1 | LFSI-DME + FEC | LFSI-DME | 100 | 85 |
| Ex. 2 | LiBF₆-(EC/EMC/DEC)+FEC | LFSI-DME | 98 | 86 |
| Ex. 3 | LiBF₄-(EC/EMC/DEC)+FEC | LFSI-DME | 101 | 82 |
| Ex. 4 | LiDFOB-(EC/EMC/DEC)+FEC | LFSI-DME | 102 | 85 |
| Ex. 5 | LiBF₄-(EC/EMC/DEC)+FBZ | LFSI-DME | 102 | 88 |
| Ex. 6 | LiBF₄-(EC/EMC/DEC)+BPY | LFSI-DME | 98 | 87 |
| Ex. 7 | LiBF₄-(EC/EMC/DEC)+BPE | LFSI-DME | 103 | 86 |
| Ex. 8 | LiDFOB, LiBOB-(EC/EMC/DEC)+FEC | LFSI-DME | 99 | 84 |
| Ex. 9 | LiDFOB, LiTA-(EC/EMC/DEC)+FEC | LFSI-DME | 99 | 79 |
| C. Ex. 1 | - | LFSI-DME+FEC | 100 | 30 |
| C. Ex. 2 | - | LFSI-DME | 100 | 20 |

It is clear from Table 1 that, although Comparative Example 1 in which a precursor was added to the electrolyte inside the battery had better cycle property than Comparative Example 2 in which a precursor (FEC) for forming the SEI layer was not added to the electrolyte inside the battery, the solid-state batteries of the present invention such as Example 1, in which an SEI layer was formed prior to battery assembly, had even better cycle property than Comparative Example 1.

### Industrial Applicability

Because the solid-state battery and solid-state battery production method of the present invention provide for high energy density and excellent cycle property, they have industrial applicability in power storage devices used in various applications.

### Reference Signs List

100, 200: Solid state battery
110: Positive electrode
120: Solid electrolyte
130: Solid electrolyte interface layer (SEI layer)
140: Negative electrode
210: Positive electrode current collector
220: Positive electrode terminal
230: Negative electrode terminal
510: Layer forming solution
520: Counter electrode
530: Lead wire
540: Electrochemical measuring device

## Claims

1. A method for producing a solid-state battery comprising a positive electrode, a solid electrolyte, and a negative electrode, the method comprising the steps of:
preparing a negative electrode that is free of a negative-electrode active material; and
forming, on at least one surface of the negative electrode, a solid electrolyte interface layer comprising a lithium-containing organic compound and a lithium-containing inorganic compound by immersing the negative electrode in a layer-forming solution comprising a lithium salt and a precursor and thereafter causing a reduction reaction on the surface of the negative electrode.

2. The production method according to claim 1, further comprising the steps of:
forming a laminate by laminating the negative electrode on which the solid electrolyte interface layer is formed, the solid electrolyte, and the positive electrode in this order so that the solid electrolyte interface layer faces the solid electrolyte; and
forming a pouch by encapsulating the laminate and the electrolyte in a sealed container.

3. The production method according to claim 2, wherein the electrolyte comprises a lithium salt and is free of the precursor.

4. The production method according to any one of claims 1 to 3, wherein the solid-state battery is a lithium secondary battery in which charging and discharging are performed by depositing lithium metal on the surface of the negative electrode with the solid electrolyte interface layer and dissolving the deposited lithium.

5. The production method according to any one of claims 1 to 4, wherein the negative electrode is a lithium-free electrode.

6. The production method according to any one of claims 1 to 5, wherein lithium foil is not formed between the solid electrolyte and the negative electrode on which the solid electrolyte interface layer is formed in the solid-state battery prior to the initial charge.

7. The production method according to any one of claims 1 to 6, wherein the precursor is at least one selected from the group consisting of aromatic compounds, ether compounds, ester compounds, carbonic acid ester compounds, fluorine compounds, sulfone compounds, and metal complexes containing one or more of Sn, Bi, Zn, Se, Sb, Mg, Ca, Al, Na, As, and Co, and is preferably at least one selected from the group consisting of trimethoxybenzene, difluoroanisole, monofluorobenzene, difluorobenzene, trifluorobenzene, cumene, biphenyl, cyclohexylbenzene, diphenylpropane, terphenyl, t-amylbenzene, t-butylbenzene, triphenylene, fluorinated ethylene carbonate, difluoroethylene carbonate, chlorinated ethylene carbonate, phenyl carbonate, diphenyl carbonate, vinyl ethylene carbonate, trifluoropropylene carbonate, phosphazene, and derivatives thereof.

8. The production method according to any one of claims 1 to 7, wherein a two-electrode system with a negative electrode as a working electrode and with an electrode whose standard electrode potential in a self-dissolution reaction is -1.0 V or less as a counter electrode is used in the layer forming step to cause a reduction reaction by applying a reduction current of 0.01 mA/cm² or more and 2.0 mA/cm² or less through the working electrode.

9. The production method according to any one of claims 1 to 8, wherein the layer-forming solution also comprises an organic solvent other than the precursor.

10. The production method according to any one of claims 1 to 8, wherein the amount of precursor in the layer-forming solution is 1% by mass or more and 100% by mass or less with respect to the total mass of components of the layer-forming solution minus the lithium salt.

11. The production method according to any one of claims 1 to 10, wherein the concentration of the lithium salt in the layer forming solution is 0.01 M or more and 20 M or less with respect to the layer forming solution.

12. The production method according to any one of claims 1 to 11, wherein the positive electrode comprises a positive electrode active material.

13. The production method according to any one of claims 1 to 12, wherein the average thickness of the solid electrolyte interface layer is 1 nm or more and 500 nm or less.

14. A solid-state battery comprising a positive electrode, a solid electrolyte, and a negative electrode that is free of a negative-electrode active material,
wherein a solid electrolyte interface layer having a lithium-containing organic compound and a lithium-containing inorganic compound is formed on the negative electrode prior to the initial charge.

15. The solid-state battery according to claim 14, wherein the solid-state battery is a lithium secondary battery in which charging and discharging are performed by depositing lithium metal on the surface of the negative electrode with the solid electrolyte interface layer and dissolving the deposited lithium.

## Patentansprüche

1. Verfahren zur Herstellung einer Festkörperbatterie, umfassend eine positive Elektrode, einen Festelektrolyten und eine negative Elektrode, wobei das Verfahren die folgenden Schritte umfasst:
Herstellen einer negativen Elektrode, die frei von aktivem Material einer negativen Elektrode ist; und
Ausbilden einer Festelektrolyt-Grenzflächenschicht auf zumindest einer Oberfläche der negativen Elektrode, umfassend eine Lithium-hältige organische Verbindung und eine Lithium-hältige anorganische Verbindung, durch Eintauchen der negativen Elektrode in eine schichtbildende Lösung, umfassend ein Lithiumsalz und einen Vorläufer, und danach Bewirken einer Reduktionsreaktion auf der Oberfläche der negativen Elektrode.

2. Herstellungsverfahren nach Anspruch 1, das weiters die folgenden Schritte umfasst:
Ausbilden eines Laminats durch Laminieren der negativen Elektrode, auf der die Festelektrolyt-Grenzflächenschicht ausgebildet ist, des Festelektrolyten und der positiven Elektrode in dieser Reihenfolge, sodass die Festelektrolyt-Grenzflächenschicht dem Festelektrolyten zugewandt ist; und
Ausbilden einer Tasche durch Einkapseln des Laminats und des Elektrolyten in einem dichten Behälter.

3. Herstellungsverfahren nach Anspruch 2, wobei der Elektrolyt ein Lithiumsalz umfasst und frei von dem Vorläufer ist.

4. Herstellungsverfahren nach einem der Ansprüche 1 bis 3, wobei die Festkörperbatterie eine Lithium-Sekundärbatterie ist, in der das Laden und Entladen durch Abscheiden von Lithiummetall auf die Oberfläche der negativen Elektrode mit der Festelektrolyt-Grenzflächenschicht und Auflösen des abgeschiedenen Lithiums durchgeführt werden.

5. Herstellungsverfahren nach einem der Ansprüche 1 bis 4, wobei die negative Elektrode eine Lithium-freie Elektrode ist.

6. Herstellungsverfahren nach einem der Ansprüche 1 bis 5, wobei keine Lithiumfolie zwischen dem Festelektrolyten und der negativen Elektrode ausgebildet ist, auf der die Festelektrolyt-Grenzflächenschicht in der Festkörperbatterie vor dem ersten Laden ausgebildet wird.

7. Herstellungsverfahren nach einem der Ansprüche 1 bis 6, wobei der Vorläufer zumindest einer ist, der aus der aus aromatischen Verbindungen, Etherverbindungen, Esterverbindungen, Carbonsäureesterverbindungen, Fluorverbindungen, Sulfonverbindungen und Metallkomplexen, die eines oder mehrere aus Sn, Bi, Zn, Se, Sb, Mg, Ca, Al, Na, As und Co enthalten, bestehenden Gruppe ausgewählt ist, und vorzugsweise zumindest einer ist, der aus der aus Trimethoxybenzol, Difluoranisol, Monofluorbenzol, Difluorbenzol, Trifluorbenzol, Cumen, Biphenyl, Cyclohexylbenzol, Diphenylpropan, Terphenyl, t-Amylbenzol, t-Butylbenzol, Triphenylen, fluoriertem Ethylencarbonat, Difluorethylencarbonat, chloriertem Ethylencarbonat, Phenylcarbonat, Diphenylcarbonat, Vinylethylencarbonat, Trifluorpropylencarbonat, Phosphazen und Derivaten davon bestehenden Gruppe ausgewählt ist.

8. Herstellungsverfahren nach einem der Ansprüche 1 bis 7, wobei ein Zwei-ElektrodenSystem mit einer negativen Elektrode als Arbeitselektrode und mit einer Elektrode, deren Standardelektrodenpotential in einer Selbstauflösungsreaktion -1,0 V oder weniger ist, als Gegenelektrode in dem schichtbildenden Schritt verwendet wird, um eine Reduktionsreaktion zu bewirken, indem ein Reduktionsstrom von 0,01 mA/cm² oder mehr und 2,0 mA/cm² oder weniger durch die Arbeitselektrode beaufschlagt wird.

9. Herstellungsverfahren nach einem der Ansprüche 1 bis 8, wobei die schichtbildende Lösung außerdem ein organisches Lösungsmittel umfasst, das nicht der Vorläufer ist.

10. Herstellungsverfahren nach einem der Ansprüche 1 bis 8, wobei die Menge des Vorläufers in der schichtbildenden Lösung 1 Massen-% oder mehr und 100 Massen-% oder weniger bezogen auf die Gesamtmasse von Komponenten der schichtbildenden Lösung minus das Lithiumsalz beträgt.

11. Herstellungsverfahren nach einem der Ansprüche 1 bis 10, wobei die Konzentration des Lithiumsalzes in der schichtbildenden Lösung 0,01 M oder mehr und 20 M oder weniger bezogen auf die schichtbildende Lösung beträgt.

12. Herstellungsverfahren nach einem der Ansprüche 1 bis 11, wobei die positive Elektrode ein aktives Material einer positiven Elektrode umfasst.

13. Herstellungsverfahren nach einem der Ansprüche 1 bis 12, wobei die durchschnittliche Dicke der Festelektrolytschicht 1 nm oder mehr und 500 nm oder weniger beträgt.

14. Festkörperbatterie, umfassend eine positive Elektrode, einen Festelektrolyten und eine negative Elektrode, die frei von einem aktiven Material einer negativen Elektrode ist,
wobei eine Festelektrolyt-Grenzflächenschicht mit einer Lithium-hältigen organischen Verbindung und einer Lithium-hältigen anorganischen Verbindung vor dem ersten Laden auf der negativen Elektrode ausgebildet wird.

15. Festkörperbatterie nach Anspruch 14, wobei die Festkörperbatterie eine Lithium-Sekundärbatterie ist, in der das Laden und Entladen durch Abscheiden von Lithiummetall auf die Oberfläche der negativen Elektrode mit der Festelektrolyt-Grenzflächenschicht und Auflösen des abgeschiedenen Lithiums durchgeführt werden.

## Revendications

1. Procédé de production d'une batterie à semi-conducteurs comprenant une électrode positive, un électrolyte solide et une électrode négative, le procédé comprenant les étapes consistant à :
préparer une électrode négative qui est exempte d'un matériau actif d'électrode négative ; et
former, sur au moins une surface de l'électrode négative, une couche d'interface d'électrolyte solide comprenant un composé organique contenant du lithium et un composé inorganique contenant du lithium en immergeant l'électrode négative dans une solution de formation de couche comprenant un sel de lithium et un précurseur, et provoquer ensuite une réaction de réduction sur la surface de l'électrode négative.

2. Procédé de production selon la revendication 1, comprenant en outre les étapes consistant à :
former un stratifié en stratifiant l'électrode négative sur laquelle la couche d'interface d'électrolyte solide est formée, l'électrolyte solide et l'électrode positive dans cet ordre de sorte que la couche d'interface d'électrolyte solide soit orientée vers l'électrolyte solide ; et
former une poche en encapsulant le stratifié et l'électrolyte dans un contenant scellé.

3. Procédé de production selon la revendication 2, dans lequel l'électrolyte comprend un sel de lithium et est exempt du précurseur.

4. Procédé de production selon l'une quelconque des revendications 1 à 3, dans lequel la batterie à semi-conducteurs est une batterie secondaire au lithium dans laquelle la charge et la décharge sont effectuées en déposant du lithium métallique sur la surface de l'électrode négative avec la couche d'interface d'électrolyte solide et en dissolvant le lithium déposé.

5. Procédé de production selon l'une quelconque des revendications 1 à 4, dans lequel l'électrode négative est une électrode sans lithium.

6. Procédé de production selon l'une quelconque des revendications 1 à 5, dans lequel une feuille de lithium n'est pas formée entre l'électrolyte solide et l'électrode négative sur laquelle la couche d'interface d'électrolyte solide est formée dans la batterie à semi-conducteurs avant la charge initiale.

7. Procédé de production selon l'une quelconque des revendications 1 à 6, dans lequel le précurseur est au moins un choisi dans le groupe constitué de composés aromatiques, de composés d'éther, de composés d'ester, de composés d'ester d'acide carbonique, de composés de fluor, de composés de sulfone et de complexes métalliques contenant un ou plusieurs parmi Sn, Bi, Zn, Se, Sb, Mg, Ca, Al, Na, As et Co, et est de préférence au moins un choisi dans le groupe constitué de triméthoxybenzène, difluoroanisole, monofluorobenzène, difluorobenzène, trifluorobenzène, cumène, biphényle, cyclohexylbenzène, diphénylpropane, terphényle, t-amylbenzène, t-butylbenzène, triphénylène, carbonate d'éthylène fluoré, carbonate de difluoroéthylène, carbonate d'éthylène chloré, carbonate de phényle, carbonate de diphényle, carbonate de vinyle et d'éthylène, carbonate de trifluoropropylène, phosphazène, et des dérivés de ceux-ci.

8. Procédé de production selon l'une quelconque des revendications 1 à 7, dans lequel un système à deux électrodes avec une électrode négative en tant qu'électrode de travail et avec une électrode dont le potentiel d'électrode standard dans une réaction d'auto-dissolution est de -1,0 V ou moins en tant que contre-électrode est utilisé dans l'étape de formation de couche pour provoquer une réaction de réduction en appliquant un courant de réduction de 0,01 mA/cm² ou plus et de 2,0 mA/cm² ou moins à travers l'électrode de travail.

9. Procédé de production selon l'une quelconque des revendications 1 à 8, dans lequel la solution de formation de couche comprend également un solvant organique autre que le précurseur.

10. Procédé de production selon l'une quelconque des revendications 1 à 8, dans lequel la quantité de précurseur dans la solution de formation de couche est supérieure ou égale à 1 % en masse et inférieure ou égale à 100 % en masse par rapport à la masse totale des composants de la solution de formation de couche moins le sel de lithium.

11. Procédé de production selon l'une quelconque des revendications 1 à 10, dans lequel la concentration du sel de lithium dans la solution de formation de couche est de 0,01 M ou plus et de 20 M ou moins par rapport à la solution de formation de couche.

12. Procédé de production selon l'une quelconque des revendications 1 à 11, dans lequel l'électrode positive comprend un matériau actif d'électrode positive.

13. Procédé de production selon l'une quelconque des revendications 1 à 12, dans lequel l'épaisseur moyenne de la couche d'interface d'électrolyte solide est de 1 nm ou plus et de 500 nm ou moins.

14. Batterie à semi-conducteurs comprenant une électrode positive, un électrolyte solide et une électrode négative qui est exempte d'un matériau actif d'électrode négative,
dans lequel une couche d'interface d'électrolyte solide présentant un composé organique contenant du lithium, et un composé inorganique contenant du lithium est formé sur l'électrode négative avant la charge initiale.

15. Batterie à semi-conducteurs selon la revendication 14, dans laquelle la batterie à semi-conducteurs est une batterie secondaire au lithium dans laquelle la charge et la décharge sont effectuées en déposant du lithium métallique sur la surface de l'électrode négative avec la couche d'interface d'électrolyte solide et en dissolvant le lithium déposé.
